(19) **Europäisches Patentamt**
**European Patent Office**
**Office européen des brevets**

(11) **EP 4 008 150 B1**

(12) # EUROPEAN PATENT SPECIFICATION

(45) Date of publication and mention
of the grant of the patent:
**01.05.2024 Bulletin 2024/18**

(21) Application number: **20846979.1**

(22) Date of filing: **30.07.2020**

(51) International Patent Classification (IPC):
**H04W 24/04** (2009.01)  **H04W 72/21** (2023.01)
**H04B 7/06** (2006.01)  **H04L 1/1607** (2023.01)
**H04L 1/1829** (2023.01)  **H04W 72/23** (2023.01)

(52) Cooperative Patent Classification (CPC):
**H04L 1/1861; H04B 7/0695; H04W 72/23;**
H04L 1/1671; H04L 1/1854; H04L 1/1858;
H04W 72/21; H04W 76/15; H04W 76/19

(86) International application number:
**PCT/CN2020/105945**

(87) International publication number:
**WO 2021/018259 (04.02.2021 Gazette 2021/05)**

(54) **METHOD OF TRANSMITTING SECONDARY CELL BEAM FAILURE RECOVERY REQUEST INFORMATION AND RELATED DEVICE**

VERFAHREN ZUR ÜBERTRAGUNG VON INFORMATIONEN ZUR WIEDERHERSTELLUNGSANFORDERUNG FÜR SEKUNDÄRZELLENSTRAHLAUSFALL UND ZUGEHÖRIGE VORRICHTUNG

PROCÉDÉ DE TRANSMISSION D'INFORMATIONS DE DEMANDE DE RÉCUPÉRATION DE DÉFAILLANCE DE FAISCEAU D'ACCUMULATEUR ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2019 US 201962881577 P**

(43) Date of publication of application:
**08.06.2022 Bulletin 2022/23**

(73) Proprietor: **FG INNOVATION COMPANY LIMITED Hong Kong (HK)**

(72) Inventors:
• **YU, Chiahao**
**Taipei 114 (TW)**
• **LIN, Wanchen**
**Taipei 114 (TW)**
• **CHENG, Yuhsin**
**Taipei 114 (TW)**
• **TSAI, Hsinhsi**
**Taipei 114 (TW)**

(74) Representative: **Müller Hoffmann & Partner Patentanwälte mbB**
**St.-Martin-Straße 58**
**81541 München (DE)**

(56) References cited:
**CN-A- 108 811 092     CN-A- 109 076 365**
**CN-A- 109 156 027     CN-A- 109 156 027**
**CN-A- 109 803 297     US-A1- 2019 053 288**
**US-A1- 2019 053 294**

• **HUAWEI ET AL: "Beam failure recovery for SCell with new beam information", 3GPP DRAFT; R1-1907533, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 13 May 2019 (2019-05-13), XP051728966, Retrieved from the Internet: URL:http://www.3gpp.org/ftp/Meetings%5F3GP P%5FSYNC/RAN1/Docs/R1%2D1907533%2Ezip [retrieved on 2019-05-13]**

- MEDIATEK INC: "Enhancements on multi-beam operations", 3GPP DRAFT; R1-1906537 MULTI-BEAM OPERATION_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20190513 - 20190517 13 May 2019 (2019-05-13), XP051727988, Retrieved from the Internet: URL:http://www.3gpp.org/ftp/Meetings%5F3GPP%5FSYNC/RAN1/Docs/R1%2D1906537%2Ezip [retrieved on 2019-05-13]
- "3rd Generation Partnership Project; Technical Specification Group Radio Access Network; NR; Medium Access Control (MAC) protocol specification (Release 15)", 3GPP DRAFT; 38321-F60, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 29 June 2019 (2019-06-29), XP051754812, Retrieved from the Internet: URL:http://www.3gpp.org/ftp/3guInternal/3GPP_ultimate_versions_to_be_transposed/sentToDpc/38321-f60.zip [retrieved on 2019-06-29]

**Description**

FIELD

The present disclosure generally relates to wireless communications, and more particularly, to a method of transmitting secondary cell (SCell) beam failure recovery request (BFRQ) information for a user equipment and a related device.

BACKGROUND

3GPP Rel-15 technical standard provides New Radio (NR) specifications, which introduce a link recovery (e.g., Beam Failure Recovery (BFR)) for special cells (e.g., Primary Cell (PCell), Primary Secondary Cell (PSCell)). There are four steps for a BFR procedure.

Step 1: Beam Failure Detection (BFD), based on implicitly/explicitly configured reference signal(s), for detecting a beam failure event of a bandwidth part (BWP) of a cell.

Step 2: New Beam Identification (NBI), based on the configured reference signals (RSs), for identifying a candidate beam for recovering a link that is detected as beam failure.

Step 3: BFRQ transmission for delivering BFR information needed for recovering the link. The BFR information may be transmitted via a Physical Random Access Channel (PRACH) based transmission, contention-free PRACH resources, or contention-based PRACH resources.

Step 4: BFR report, in response to the BFRQ transmission and transmitted by a next-generation node B (gNB) for completing the link recovery with the candidate beam. The UE may monitor a physical downlink (DL) control channel (PDCCH) transmission on a Search Space corresponding to a Control Resource Set (CORESET) dedicated for the BFR report, to determine if the BFRQ transmission is successfully received by the gNB.

In 3GPP Rel-16 technical standard, a BFR procedure in an SCell is introduced, for both DL only SCell and SCell(s) with both DL and uplink (UL). For delivering SCell BFRQ information of the SCell BFR procedure, a dedicated Scheduling Request (SR)-like physical UL control channel (PUCCH) resource may be used to transmit an SCell beam failure event, and a Medium Access Control (MAC) control element (CE) over a PUSCH resource may be used for the UE to report new beam information (if available) and failed Component Carrier (CC) index(es). The SR-like PUCCH resource transmission may be performed before a transmission of the MAC CE. The SR-like PUCCH resource transmission is denoted as a BFR-SR transmission. With a BFR-SR transmission, it is crucial to timely deliver it to the gNB. A BFR-SR transmission is used to notify the gNB of the beam failure event at the user equipment (UE) side. A failed/delayed notification may cause inefficient, or even failed, traffic delivery between the gNB and the UE. Failed or delayed notification of a BFR-SR transmission may be caused by a collision between the BFR-SR transmission and UL control information (UCI) on the PUCCH resource, or infrequent physical resource for BFR-SR transmission.

However, there is no specification addressing the collision resolution between the UCI and the BFR-SR transmission. Thus, the BFR procedure may not be completed in time and fail. Additionally, the BFR-SR transmission should be distinguished from a normal SR transmission which is currently defined in 3GPP Rel-15/16 technical standard, for example, TS 38.321 V15.5.0.

Document HUAWEI ET AL: "Beam failure recovery for SCell with new beam information", 3GPP DRAFT; R1-1907533, presents some views on BFR for SCell.

SUMMARY

The present disclosure provides a method of transmitting SCell BFRQ information in a BFR procedure and a related device.

The invention is defined by the appended claims.

BRIEF DESCRIPTION OF THE DRAWINGS

Aspects of the exemplary disclosure are best understood from the following detailed description when read with the accompanying figures. Various features are not drawn to scale, dimensions of various features may be arbitrarily increased or reduced for clarity of discussion.

   FIG. 1 is a flowchart illustrating an SCell BFRQ information transmission, in accordance with example implementations of the present disclosure.
   FIG. 2 is a block diagram illustrating a node for wireless communication, in accordance with example implementations of the present disclosure.

DESCRIPTION

The following description contains specific information pertaining to exemplary implementations in the present disclosure. The drawings and their accompanying detailed description are directed to exemplary implementations. However, the present disclosure is not limited to these exemplary implementations. Other variations and implementations of the present disclosure will occur to those skilled in the art. Unless noted otherwise, like or corresponding elements in the figures may be indicated by like or corresponding reference numerals. Moreover, the drawings and illustrations are generally not to scale and are not intended to correspond to actual relative dimensions.

For consistency and ease of understanding, like features are identified (although, in some examples, not shown) by numerals in the exemplary figures. However, the features in different implementations may be different in other respects, and therefore shall not be narrowly confined to what is shown in the figures.

The phrases "in one implementation," and "in some implementations," may each refer to one or more of the same or different implementations. The term "coupled" is defined as connected, whether directly or indirectly via intervening components, and is not necessarily limited to physical connections. The term "comprising" means "including, but not necessarily limited to" and specifically indicates open-ended inclusion or membership in the described combination, group, series.

Additionally, any two or more of the following paragraphs, (sub)-bullets, points, actions, behaviors, terms, alternatives, examples, or claims described in the following disclosure may be combined logically, reasonably, and properly to form a specific method. Any sentence, paragraph, (sub)-bullet, point, action, behaviors, terms, or claims described in the following disclosure may be implemented independently and separately to form a specific method. Dependency, e.g., "based on", "more specifically", "preferably", "In one embodiment", "In one implementation", "In one alternative" etc., in the following disclosure refers to just one possible example that would not restrict the specific method.

For explanation and non-limitation, specific details, such as functional entities, techniques, protocols, and standards are set forth for providing an understanding of the described technology. In other examples, detailed description of well-known methods, technologies, system, and architectures are omitted so as not to obscure the description with unnecessary details.

Persons skilled in the art will recognize that any described network function(s) or algorithm(s) may be implemented by hardware, software, or a combination of software and hardware. Described functions may correspond to modules that are software, hardware, firmware, or any combination thereof. The software implementation may comprise computer executable instructions stored on computer readable medium such as memory or other type of storage devices. For example, one or more microprocessors or general-purpose computers with communication processing capability may be programmed with corresponding executable instructions and carry out the described network function(s) or algorithm(s). The microprocessors or general-purpose computers may be formed of applications specific integrated circuitry (ASIC), programmable logic arrays, and/or using one or more digital signal processor (DSPs). Although some of the disclosed implementations are directed to software installed and executing on computer hardware, alternative implementations as firmware or as hardware or combination of hardware and software are well within the scope of the present disclosure.

The computer readable medium includes but is not limited to random access memory (RAM), read only memory (ROM), erasable programmable read-only memory (EPROM), electrically erasable programmable read-only memory (EEPROM), flash memory, compact disc (CD) read-only memory (CD ROM), magnetic cassettes, magnetic tape, magnetic disk storage, or any other medium capable of storing computer-readable instructions.

A radio communication network architecture (e.g., a long term evolution (LTE) system, an LTE-Advanced (LTE-A) system, an LTE-A Pro system, or an New Radio (NR) system) typically includes at least one base station (BS), at least one UE, and one or more optional network elements that provide connection with a network. The UE communicates with the network (e.g., a core network (CN), an evolved packet core (EPC) network, an Evolved Universal Terrestrial Radio Access Network (RAN) (E-UTRAN), a Next-Generation (GN) Core (NGC), 5G CN (5GC), or an internet) via a RAN established by the BS.

It should be noted that, in the present disclosure, a UE may include, but is not limited to, a mobile station, a mobile terminal or device, a user communication radio terminal. For example, a UE may be a portable radio equipment, that includes, but is not limited to, a mobile phone, a tablet, a wearable device, a sensor, or a personal digital assistant (PDA) with wireless communication capability. The UE is configured to receive and transmit signals over an air interface to one or more cells in a RAN.

A BS may include, but is not limited to, a node B (NB) as in the UMTS, an evolved node B (eNB) as in the LTE-A, a radio network controller (RNC) as in the UMTS, a BS controller (BSC) as in the Global System for Mobile communications (GSM)/ GSM Enhanced Data rates for GSM Evolution (EDGE) RAN (GERAN), a Next Generation (NG)-eNB as in an Evolved Universal Terrestrial Radio Access (E-UTRA) BS in connection with the 5GC, a gNB as in the 5G-RAN, and any other apparatus capable of controlling radio communication and managing radio resources within a cell. The BS may connect to serve the one or more UEs via a radio interface to the network.

A BS may be configured to provide communication services according to at least one of the following radio access technologies (RATs): Worldwide Interoperability for Microwave Access (WiMAX), GSM (often referred to as 2G), GERAN, General Packet Radio Service (GRPS), UMTS (often referred to as 3G) according to basic wideband-code division multiple access (W-CDMA), high-speed packet access (HSPA), LTE, LTE-A, evolved LTE (eLTE), New Radio (NR, often referred to as 5G), and/or LTE-A Pro. However, the scope of the present disclosure should not be limited to these protocols.

The BS is operable to provide radio coverage to a specific geographical area using a plurality of cells forming the RAN. The BS supports the operations of the cells. Each cell is operable to provide services to at least one UE within radio coverage of the cell. More specifically, each cell (often referred to as a serving cell) provides services to serve one or more UEs within the cell's radio coverage, (e.g., each cell schedules the DL and optionally UL resources to at least one UE within the cell's radio coverage for DL and optionally UL packet transmissions). The BS can communicate with one or more UEs in the radio communication system via the plurality of cells. A cell may allocate sidelink (SL) resources for supporting proximity service (ProSe), LTE SL service, and LTE/NR V2X services. Each cell may have overlapped coverage areas with other cells.

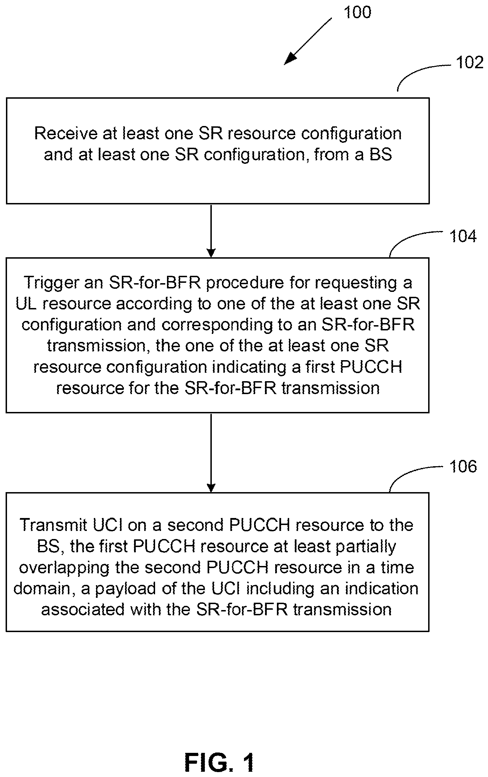

FIG. 1 illustrates a method 100 for a UE to transmit SCell BFRQ information in a BFR procedure. In action 102, the UE receives at least one SR resource configuration and at least one SR configuration from a BS. In action 104, the UE triggers an SR-for-BFR procedure for requesting a UL resource according to one of the at least one SR configuration and corresponding to an SR-for-BFR transmission, the one of the at least one SR resource configuration indicating a first PUCCH resource for the SR-for-BFR transmission. In action 106, the UE transmits UCI on a second PUCCH resource to the BS, the first PUCCH resource at least partially overlapping the second PUCCH resource in a time domain, where a payload of the UCI includes an indication associated with the SR-for-BFR transmission.

It is noted that an SR configuration is used for triggering an SR-for-BFR procedure. To inform the BS of the triggered SR-for-BFR procedure, an SR resource for the SR-for-BFR procedure may be configured in an SR resource configuration.

The method 100 is related to how to perform BFRQ delivery. More specifically, the method 100 provides a solution for when a collision between the SR-for-BFR transmission and the UCI transmission occurs (e.g., PUCCH resources are overlapped), such that the SR-for-BFR transmission will be transmitted with the UCI, and the payload of the UCI includes the indication corresponding to a resource for the SR-for-BFR transmission.

After the SR-for-BFR transmission is performed, the UE may obtain a UL resource for transmitting the BFRQ information to the BS. The BFRQ information may include failed SCell index(es) and/or new beam information of failed SCell(s). SCell beam failure event may additionally be included. For delivering failed SCell index(es), new beam information, or beam failure event to a network (NW), channel(s) used for transmission may include the PRACH channel, PUCCH channel, PUSCH channel (e.g., BFR MAC CE), or combinations of the above channels.

As an example of the above-mentioned combinations of channels, a dedicated SR-like PUCCH resource may be used to convey SCell beam failure event, and a MAC CE using a PUSCH resource may be used for the UE to report new beam information (if present) and failed CC index(es). In one example, the SR-like PUCCH resource transmission may be performed before a transmission of the MAC CE.

Actions for BFRQ delivery are disclosed below.

Action 1: the UE may send a BFR-SR, specifically SR-for-BFR transmission, over a PCell, PSCell, and/or SCell, wherein the BFR-SR may be used to inform a beam failure event of one or multiple secondary CC(s) and/or to request a UL resource for transmitting information related to the beam failure event. It is noted that the UE may determine whether to transmit the BFR-SR according to if any UL resource is available. If there is an available UL resource, the UE may send the BFR information directly. The BFR information may be the same as BFRQ information described in Action 2 below. On the contrary, if there is no available UL resource, the UE sends a BFR-SR to request a UL resource.

Action 2: the UE may send BFRQ information to deliver BFR information to the BS. The BFRQ information may include failed CC index(es), new beam(s) information (e.g., in the form of RS index(es) configured for NBI), or indicating no available new beam (e.g., no new beam with L1 Reference Symbol Received Power (RSRP) higher than a threshold). The new beam information is associated with the failed CC index(es).

In one implementation, the BFRQ information may be transmitted (only) via the UL grant that is requested by a BFR-SR.

In other implementations, the BFRQ information may be transmitted via any UL grant (e.g., UL grant obtained from a random access response (RAR), dynamic UL grant scheduled by a PDCCH, and/or a UL configured grant).

In 3GPP NR Rel-15/16, UCI may be carried on a PUCCH resource, where different types of the UCI may be multiplexed together in one transmission. UCI types include normal SR, Hybrid Automatic Repeat Request (HARQ) information, and Channel State Information (CSI). It is noted that a BFR-SR is differentiated from a normal SR. For a normal SR procedure, the SR is used for requesting a UL resource for any purposes as disclosed in NR systems, for example, 3GPP Rel-15/16 (e.g., TS 38.321 V15.5.0). For an SR-for-BFR procedure, the BFR-SR is used for requesting a UL resource for the BFR-SR as mentioned in Action 1. Thus, the BS that receives the BFR-SR may provide a UL grant for delivering the BFRQ information as mentioned in Action 2.

The PUCCH resources may be used for reporting different types of UCI to a BS. A PUCCH resource for a type of UCI (e.g., normal SR, HARQ information, or CSI) may overlap a PUCCH resource for a BFR-SR in the same UL slot. The two PUCCH resources may be fully overlapped, partially overlapped, or non-overlapped in a time domain. PUCCH resources corresponding to the same UCI type may overlap. For example, PUCCH resources for normal SR transmission corresponding to different SR resource configurations may be provided in the same UL slot. In another example, PUCCH resources for normal SR transmission and HARQ information transmission may be provided in in the same UL slot. When the abovementioned collision occurs, pre-defined rules are needed, so that the UE may determine whether different UCI types and/or BFR-SR should be multiplexed, or dropped. More specifically, with BFR-SR being introduced, new rules are needed if BFR-SR is to be prioritized and/or to be differentiable to the BS.

An SR resource configuration may be used to provide an SR resource for a BFR-SR, where the SR resource is associated with the PUCCH format 0 or the PUCCH format 1. On the other hand, a PUCCH resource for HARQ information report or CSI report may be associated with the PUCCH format 0/1/2/3/4.

Prioritization between UCI types (e.g., HARQ information, normal SR, CSI) and a BFR-SR is disclosed.

In one implementation, a BFR-SR may be prioritized over HARQ information. For example, a transmission priority is in an order of BFR-SR > HARQ-ACK > normal SR > CSI with higher priority > CSI with lower priority. The transmission priority may be applicable when a collision between the following PUCCH resources occurs.

Case 1: PUCCH resources with repetition overlapping another PUCCH resource with repetition.

Case 2: PUCCH resources with repetition overlapping another PUCCH resource without repetition.

Case 3: PUCCH resources without repetition overlapping another PUCCH resource without repetition.

In one implementation, a BFR-SR may be distinguishable from other normal SRs. For example, a BFR-SR and a normal SR may correspond to individual SR identity (ID) (e.g., "schedulingRequestResourceId" defined in 3GPP TS 38.331 V15.5.0).

A BFR-SR is prioritized over other SRs. When there is a collision between a BFR-SR and a normal SRs, the BFR-SR is prioritized over the normal SR.

In some implementations, normal SRs may be configured with different priority levels. For example, an SR related to a Ultra-reliable Low-latency Communication (URLLC) traffic logic channel may be configured with higher priority level. In this case, a BFR-SR may or may not be prioritized over a URLLC SR. if a BFR-SR is not prioritized over a URLLC SR, the resource corresponding to the URLLC SR is selected for transmission. More specifically, an SR related to an URLLC traffic logical channel may indicate that a buffer status report (BSR) is triggered on a specific logical channel configured with a higher priority, wherein the SR is configured with a specific index (e.g., "schedulingRequestID" or "schedulingRequestResourceId" defined in 3GPP TS 38.331 V15.5.0).

Various methods for handling PUCCH resource collision are disclosed below.

**Method 1: BFR-SR (PUCCH-0) and HARQ information (PUCCH-0)**

When a first PUCCH format 0 resource with a BFR-SR collides with a second PUCCH format 0 resource with HARQ information, for a negative BFR-SR state indication, the UE transmits the BFR-SR on the second PUCCH format 0 resource. The HARQ information is delivered by the second PUCCH format 0 resource based on a cyclic shift selection of a sequence transmitted on the second PUCCH format 0 resource. The cyclic shift value is determined based on the HARQ information, as defined in 3GPP Rel-15/16 detailed in, for example, TS 38.213 V15.5.0.

On the other hand, for a positive BFR-SR state indication, the UE transmits the BFR-SR on the first PUCCH format 0 resource. HARQ information is delivered by the first PUCCH format 0 resource based on a cyclic shift of a sequence transmitted on the first PUCCH format 0 resource. The cyclic shift value is determined based on the HARQ information, as defined in 3GPP Rel-15/16 detailed in, for example, TS 38.213 V15.5.0. For example, the cyclic shift value may be additionally affected by a BFR-SR state (e.g., positive or negative). The cyclic shift value is selected based on the BFR-SR state and may follow similar principle as for an SR state, as defined in 3GPP Rel-15/16 detailed in, for example, TS 38.213 V15.5.0.

**Method 2: normal SR (PUCCH-1) and HARQ information (PUCCH-0)**

When a first PUCCH format 1 resource with positive normal SR collides with a second PUCCH format 0 resource with HARQ information, the UE transmits the normal SR on the second PUCCH format 0 resource and the first PUCCH format 1 resource is not used for SR transmission. SR transmission is multiplexed on the second PUCCH format 0 resource. The determination of a cyclic shift of a sequence that is transmitted on the second PUCCH format 0 resource is affected by an SR state (e.g., positive or negative). For example, as defined in 3GPP Rel-15/16 and detailed in, for example, TS 38.213 V15.5.0. In this case, the NW may not know which SR configuration has been triggered for the received SR transmission.

**Method 3: BFR-SR (PUCCH-1) and HARQ information (PUCCH-0)**

When a first PUCCH format 1 resource with a BFR-SR collides with a second PUCCH format 0 resource with HARQ information, for a negative BFR-SR state indication, the UE transmits the BFR-SR on the second PUCCH format 0 resource. HARQ information is delivered by the second PUCCH format 0 resource based on a cyclic shift of a sequence transmitted on the second PUCCH format 0 resource. The cyclic shift value is determined based on the HARQ information, as defined in 3GPP Rel-15/16 and detailed in, for example, TS 38.213 V15.5.0.

On the other hand, for positive BFR-SR state indication, the UE transmits the BFR-SR on the first PUCCH format 1 resource, as defined in 3GPP Rel-15/16 and detailed in, for example, TS 38.213 V15.5.0. HARQ information is dropped and the second PUCCH format 0 resource is not used for transmission.

Alternatively, in one implementation, a collision between a BFR-SR on a PUCCH format 1 resource and HARQ information on a PUCCH format 0 resource is not expected by the UE. The UE does not expect to receive such resource configuration.

### Method 4: BFR-SR (PUCCH-0) and HARQ information (PUCCH-1)

When a first PUCCH format 0 resource with a BFR-SR collides with a second PUCCH format 1 resource with HARQ information, for a negative BFR-SR state indication, the UE transmits the HARQ information on the second PUCCH format 1 resource. HARQ information is delivered by the second PUCCH format 1 resource.

On the other hand, for a positive BFR-SR state indication, the UE transmits the BFR-SR in the first PUCCH format 0 resource, and the second PUCCH format 1 resource is not transmitted. The HARQ information is delivered by the first PUCCH format 0 resource based on a cyclic shift of a sequence transmitted on the first PUCCH format 0 resource. The cyclic shift value is determined based on the HARQ information, as defined in 3GPP Rel-15/16 and detailed in, for example, TS 38.213 V15.5.0.

In one example, the cyclic shift value may be additionally affected by a BFR-SR state (e.g., negative or positive), as defined in 3GPP Rel-15/16 and detailed in, for example, TS 38.213 V15.5.0.

Alternatively, the UE may transmit the BFR-SR on the first PUCCH format 0 resource. The HARQ information is dropped and the second PUCCH format 0 resource is not used for transmission.

Alternatively, a collision between BFR-SR in the PUCCH format 0 resource and HARQ information in the PUCCH format 1 resource is not expected by the UE. The UE does not expect to receive such resource configuration.

### Method 5: BFR-SR and HARQ information on PUCCH format 2/3/4

If the UE transmits a PUCCH with HARQ information on a resource using PUCCH format 2, PUCCH format 3, or PUCCH format 4 in a slot, BFR-SR information may be combined with the HARQ information to form a combined UCI carried on the PUCCH. The combined UCI includes the BFR-SR and the HARQ information (e.g., $O_{ACK}$ bits). A payload of the combined UCI includes $log_2[K + 1]$ bits indicating a negative or positive SR (including a BFR-SR), in ascending order of a value of an SR ID (e.g., "schedulingRequestResourceId") appended to the HARQ information (e.g., $O_{ACK}$ bits). 'K' is the number of SR resource configuration of the UE. 'K' is the number of a set of "schedulingRequestResourceId" for respective 'K' SRs. The 'K' SRs may be in a slot for transmitting K PUCCHs which is configured to the UE.

Alternatively, for a positive BFR-SR, the UE may transmit the BFR-SR on a correspondingly configured PUCCH format 0 or PUCCH format 1 resource, but drop the HARQ information and other SR.

### Method 6: BFR-SR and CSI on PUCCH format 2/3/4

If the UE transmits a PUCCH with CSI report on a resource using PUCCH format 2, PUCCH format 3, or PUCCH format 4 in a slot, BFR-SR information may be combined with the CSI report to form a combined UCI carried in the PUCCH. The combined UCI includes the BFR-SR and the CSI report (e.g., $O_{CSI}$ bits). A payload of the combined UCI includes $log_2[K + 1]$ bits representing a negative or positive SR (including BFR-SR), in ascending order of a value of an SR ID (e.g., "schedulingRequestResourceId") prepended to the CSI report (e.g., $O_{CSI}$ bits). 'K' is the number of SR resource configuration of the UE. 'K' is the number of a set of "schedulingRequestResourceId" for respective 'K' SRs. The 'K' SRs may be in a slot for transmitting K PUCCHs which is configured to the UE.

Alternatively, for a positive BFR-SR, the UE may transmit the BFR-SR on a correspondingly configured PUCCH format 0 or PUCCH format 1 resource, but drop the CSI and other SR.

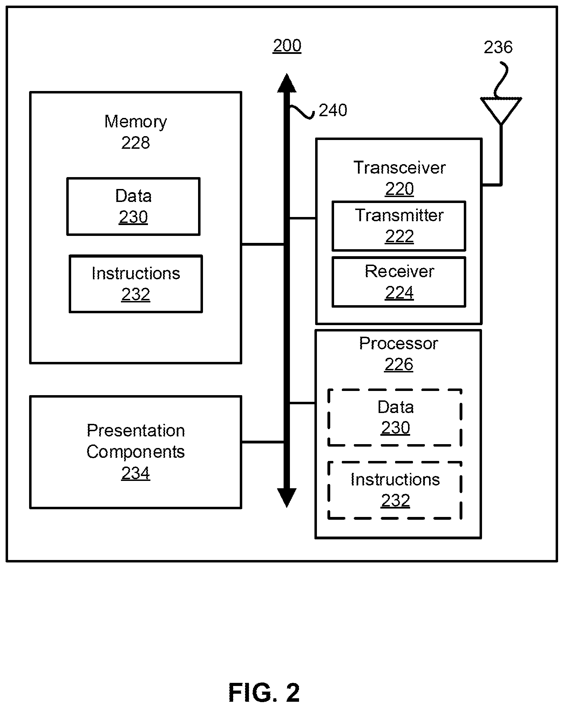

FIG. 2 illustrates a node 200 for wireless communication according to the present disclosure.

As illustrated in FIG. 2, the node 200 may include a transceiver 220, a processor 226, memory 228, one or more presentation components 234, and at least one antenna 236. The node 200 may also include a Radio Frequency (RF) spectrum band module, a BS communications module, a network communications module, and a system communications management module, input/output (I/O) ports, I/O components, and a power supply (not illustrated). Each of these components may be in communication with each other, directly or indirectly, over one or more buses 240. The node 200 may be a UE that performs various disclosed functions as illustrated in FIG. 1.

The transceiver 220 includes a transmitter 222 (with transmitting circuitry) and a receiver 224 (with receiving circuitry) and may be configured to transmit and/or receive time and/or frequency resource partitioning information. The transceiver 220 may be configured to transmit in different types of subframes and slots including, but not limited to, usable, non-usable and flexibly usable subframes and slot formats. The transceiver 220 may be configured to receive data and control channels.

The node 200 may include a variety of computer-readable media. Computer-readable media may be any media that can be accessed by the node 200 and include both volatile and non-volatile media, removable and non-removable media. Computer-readable media may include computer storage media and communication media. Computer storage media includes both volatile and non-volatile, as well as removable and non-removable media implemented in any method or technology for storage of information such as computer-readable instructions, data structures, program modules or other data.

Computer storage media includes RAM, ROM, EEPROM, flash memory or other memory technology, Compact Disc Read-Only Memory (CD-ROM), digital versatile disks (DVD) or other optical disk storage, magnetic cassettes, magnetic tape, magnetic disk storage or other magnetic storage devices. Computer storage media does not include a propagated data signal. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. Communication media includes wired media such as a wired network or direct-wired connection, and wireless media such as acoustic, radio frequency (RF), infrared and other wireless media. Combinations of any of the disclosed media should be included within the scope of computer-readable media.

The memory 228 may include computer-storage media in the form of volatile and/or non-volatile memory. The memory 228 may be removable, non-removable, or a combination thereof. Memory includes solid-state memory, hard drives, and optical-disc drives. As illustrated in FIG. 2, the memory 228 may store computer-readable, computer-executable instructions 232 (e.g., software codes) that are configured to cause the processor 226 (e.g., processing circuitry) to perform various disclosed functions. Alternatively, the instructions 232 may be configured to cause the node 200 (e.g., when compiled and executed) to perform various disclosed functions.

The processor 226 may include an intelligent hardware device (e.g., a central processing unit (CPU), a microcontroller, an Application Specific Integrated Circuit (ASIC), etc.). The processor 226 may include memory. The processor 226 may process the data 230 and the instructions 232 received from the memory 228, and information received via the transceiver 220, the baseband communications module, and/or the network communications module. The processor 226 may also process information to be sent to the transceiver 220 for transmission via the antenna 236, to the network communications module for transmission to a CN.

One or more presentation components 234 present data to a person or other device. Presentation components 234 include a display device, speaker, printing component, and vibrating component.

**Claims**

1. A method of transmitting secondary cell, SCell, beam failure recovery request, BFRQ, information in a beam failure recovery, BFR, procedure for a user equipment, UE, the method comprising:

   receiving (102), from a base station, BS, at least one scheduling request, SR, resource configuration and at least one SR configuration;
   triggering (104) a first type of SR transmission for requesting a first uplink, UL, resource for transmitting beam failure recovery request, BFRQ, information according to a first of the at least one SR configuration, wherein one of the at least one SR resource configuration indicates a first physical uplink control channel, PUCCH, resource for the first type of SR transmission; and
   in a case that the first PUCCH resource for the first type of SR transmission overlaps a second PUCCH resource for a second type of SR transmission for requesting a second UL resource for transmitting non-BFRQ information according to a second of the at least one SR configuration, transmitting (106), to the BS, first uplink control information, UCI, on the first PUCCH resource; wherein the first type of SR transmission is prioritized over the second type of SR transmission, and a payload of the first UCI includes a first indication associated with the first type of SR transmission.

2. The method of claim 1, wherein each of the at least one SR resource configuration includes an SR resource identity.

3. The method of claim 1, wherein the first PUCCH resource is conformed to a transmission structure of PUCCH format 0 or format 1.

4. The method of claim 1, further comprising:

   in a case that the first PUCCH resource for the first type of SR transmission overlaps a third PUCCH resource for a transmission of at least one of Hybrid Automatic Repeat Request, HARQ, information or a Channel State Information, CSI, report, transmitting, to the BS, second UCI on the third PUCCH resource,
   wherein a payload of the second UCI includes the first indication associated with the first type of SR transmission and the at least one of the HARQ information or the CSI report, and the third PUCCH resource is conformed to a transmission structure of PUCCH format 2, format 3, or format 4.

5. The method of claim 1, further comprising:

in a case that the first PUCCH resource for the first type of SR transmission overlaps a third PUCCH resource for a transmission of Hybrid Automatic Repeat Request, HARQ, information, transmitting, to the BS, second UCI on the third PUCCH resource,
wherein a payload of the second UCI includes a second indication associated with the first type of SR transmission and the HARQ information, and the first PUCCH resource or the third PUCCH resource is conformed to a transmission structure of PUCCH format 0 or PUCCH format 1.

6. The method of claim 1, wherein:

the payload of the first UCI includes $log_2[K+1]$ bits, and the $log_2[K+1]$ bits provide the first indication associated with the first type of SR transmission; and
K is a number of the at least one SR resource configuration.

7. A user equipment (200), UE, for transmitting secondary cell, SCell, beam failure recovery request, BFRQ, information in a beam failure recovery, BFR, procedure, the UE comprising:

a processor (226); and
a memory (228) coupled to the processor (226), wherein the memory (228) stores a computer-executable program that when executed by the processor (226), causes the processor (226) to perform the method of any of claims 1 to 6.

**Patentansprüche**

1. Verfahren zum Übertragen von Informationen für eine Anforderung einer Wiederherstellung bei Strahlausfall, BFRQ, einer Sekundärzelle, SCell, in einer Prozedur zur Wiederherstellung bei Strahlausfall, BFR, für ein Nutzerendgerät, UE, wobei das Verfahren aufweist:

Empfangen (102), von einer Basisstation, BS, von zumindest einer Ressourcenkonfiguration für eine Scheduling-Anforderung, SR, und zumindest einer SR-Konfiguration;
Auslösen (104) eines ersten Typs einer SR-Übertragung zum Anfordern einer ersten Uplink-, UL-, Ressource zum Übertragen von Informationen für eine Anforderung einer Wiederherstellung bei Strahlausfall, BFRQ, gemäß einer einer ersten der zumindest einen SR-Konfiguration, wobei eine der zumindest einen SR-Ressourcenkonfiguration eine erste Ressource eines physikalischen Uplink-Steuerkanals, PUCCH, für den ersten Typ einer SR-Übertragung angibt; und
in einem Fall, in dem die erste PUCCH-Ressource für den ersten Typ einer SR-Übertragung eine zweite PUCCH-Ressource für einen zweiten Typ einer SR-Übertragung zum Anfordern einer zweiten UL-Ressource zum Übertragen von Nicht-BFRQ-Informationen gemäß einer zweiten der zumindest einen SR-Konfiguration überlappt, Übertragen (106), zur BS, einer ersten Uplink-Steuerungsinformation, UCI, auf der ersten PUCCH-Ressource;
wobei der erste Typ einer SR-Übertragung gegenüber dem zweiten Typ einer SR-Übertragung priorisiert ist und Nutzdaten der ersten UCI eine erste Angabe enthalten, die mit dem ersten Typ einer SR-Übertragung assoziiert ist.

2. Verfahren nach Anspruch 1, wobei jede der zumindest einen SR-Ressourcenkonfiguration eine SR-Ressourcenkennung enthält.

3. Verfahren nach Anspruch 1, wobei die erste PUCCH-Ressource einer Übertragungsstruktur eines PUCCH-Formats 0 oder -Formats 1 entspricht.

4. Verfahren nach Anspruch 1, ferner aufweisend:

in einem Fall, in dem die erste PUCCH-Ressource für den ersten Typ einer SR-Übertragung eine dritte PUCCH-Ressource für eine Übertragung einer Information einer Hybrid-Automatic-Repeat-Anforderung, HARQ, und/oder eines Kanalzustandsinformations-, CSI-, Berichts überlappt, Übertragen, zur BS, einer zweiten UCI auf der dritten PUCCH-Ressource,
wobei Nutzdaten der zweiten UCI die erste Angabe, die mit dem ersten Typ einer SR-Übertragung assoziiert ist, und die HARQ-Information und/oder den CSI-Bericht enthalten und die dritte PUCCH-Ressource einer Übertragungsstruktur eines PUCCH-Formats 2, -Formats 3 oder -Formats 4 entspricht.

5. Verfahren nach Anspruch 1, ferner aufweisend:

in einem Fall, in dem die erste PUCCH-Ressource für den ersten Typ einer SR-Übertragung eine dritte PUCCH-Ressource für eine Übertragung einer Information einer Hybrid-Automatic-Repeat-Anforderung, HARQ, überlappt, Übertragen, zur BS, einer zweiten UCI auf der dritten PUCCH-Ressource,

wobei Nutzdaten der zweiten UCI eine zweite Angabe, die mit dem ersten Typ einer SR-Übertragung assoziiert ist, und die HARQ-Information enthalten und die erste PUCCH-Ressource oder die dritte PUCCH-Ressource einer Übertragungsstruktur eines PUCCH-Formats 0 oder PUCCH-Formats 1 entspricht.

6. Verfahren nach Anspruch 1, wobei:

die Nutzdaten der ersten UCI $\log_2[K+1]$ Bits enthalten und die $\log_2[K+1]$ Bits die erste Angabe bereitstellen, die mit dem ersten Typ einer SR-Übertragung assoziiert ist; und
K eine Anzahl der zumindest einen SR-Ressourcenkonfiguration ist.

7. Nutzerendgerät (200), UE, zum Übertragen von Informationen für eine Anforderung einer Wiederherstellung bei Strahlausfall, BFRQ, einer Sekundärzelle, SCell, in einer Prozedur zur Wiederherstellung bei Strahlausfall, BFR, wobei das UE aufweist:

einen Prozessor (226); und
einen Speicher (228), der mit dem Prozessor (226) gekoppelt ist, wobei der Speicher (228) ein von einem Computer ausführbares Programm speichert, das, wenn es vom Prozessor (226) ausgeführt wird, veranlasst, dass der Prozessor (226) das Verfahren nach einem der Ansprüche 1 bis 6 durchführt.

**Revendications**

1. Procédé de transmission d'informations de demande de récupération après défaillance de faisceau, BFRQ, de cellule secondaire, SCell, dans une procédure de récupération après défaillance de faisceau, BFR, pour un équipement utilisateur, UE, le procédé comprenant les étapes :

recevoir (102), depuis une station de base, BS, au moins une configuration de ressource de demande de planification, SR, et d'au moins une configuration de SR ;
déclencher (104) un premier type de transmission de SR pour demander une première ressource de liaison montante, UL, pour transmettre les informations de demande de récupération après défaillance de faisceau, BFRQ, selon une première de l'au moins une configuration de SR, dans lequel une de l'au moins une configuration de ressource de SR indique une première ressource de canal de commande de liaison montante physique, PUCCH, pour le premier type de transmission de SR ; et
dans un cas où la première ressource de PUCCH pour le premier type de transmission de SR chevauche une deuxième ressource de PUCCH pour un deuxième type de transmission de SR pour demander une deuxième ressource d'UL pour transmettre des informations non BFRQ selon une deuxième de l'au moins une configuration de SR, transmettre (106), à la BS, des premières informations de commande de liaison montante, UCI, sur la première ressource de PUCCH ;
dans lequel le premier type de transmission de SR est prioritaire sur le deuxième type de transmission de SR, et une charge utile des premières UCI comporte une première indication associée au premier type de transmission de SR.

2. Procédé selon la revendication 1, dans lequel chacune de l'au moins une configuration de ressource de SR comporte une identité de ressource de SR.

3. Procédé selon la revendication 1, dans lequel la première ressource de PUCCH est conforme à une structure de transmission de format 0 ou format 1 de PUCCH.

4. Procédé selon la revendication 1, comprenant en outre :

dans un cas où la première ressource de PUCCH pour le premier type de transmission de SR chevauche une troisième ressource de PUCCH pour une transmission d'au moins un élément parmi des informations de demande de répétition automatique hybride, HARQ, ou un rapport d'informations d'état de canal, CSI, la transmission, à la BS, de deuxièmes UCI sur la troisième ressource de PUCCH,
dans lequel une charge utile des deuxièmes UCI comporte la première indication associée au premier type de transmission de SR et l'au moins un élément parmi les informations de HARQ ou le rapport de CSI, et la troisième ressource de PUCCH est conforme à une structure de transmission de format 2, format 3 ou format 4 de PUCCH.

5. Procédé selon la revendication 1, comprenant en outre l'étape :

dans un cas où la première ressource de PUCCH pour le premier type de transmission de SR chevauche une troisième ressource de PUCCH pour une transmission d'informations de demande de répétition automatique hybride, HARQ, transmettre, à la BS, des deuxièmes UCI sur la troisième ressource de PUCCH,

dans lequel une charge utile des deuxièmes UCI comporte une deuxième indication associée au premier type de transmission de SR et les informations de HARQ, et la première ressource de PUCCH ou la troisième ressource de PUCCH est conforme à une structure de transmission de format 0 de PUCCH ou de format 1 de PUCCH.

6. Procédé selon la revendication 1, dans lequel :

la charge utile des premières UCI comporte $log_2 (K + 1)$ bits, et les $log_2 (K + 1)$ bits fournissent la première indication associée au premier type de transmission de SR ; et
K est un nombre de l'au moins une configuration de ressource de SR.

7. Équipement utilisateur (200), pour transmettre des informations de demande de récupération après défaillance de faisceau, BFRQ, de cellule secondaire, SCell, dans une procédure de récupération après défaillance de faisceau, BFR, l'UE comprenant :

un processeur (226) ; et
une mémoire (228) couplée au processeur (226), dans lequel la mémoire (228) stocke un programme exécutable par ordinateur qui, lorsqu'il exécuté par le processeur (226), amène le processeur (226) à réaliser le procédé selon l'une des revendications 1 à 6.

FIG. 1

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **HUAWEI et al.** Beam failure recovery for SCell with new beam information. *3GPP DRAFT; R1-1907533*